# EUROPEAN PATENT APPLICATION

(11) **EP 2 336 861 A2**
(43) Date of publication of application: **22.06.2011**
(21) Application number: 10190481.1
(22) Date of filing: 09.11.2010
(51) Int. Cl.: G06F 3/042

(54) **Multi-touch and proximate object sensing apparatus using sensing array**

(30) Priority: 13.11.2009 KR 20090109734; 02.08.2010 KR 20100074599
(71) Applicant: Samsung Electronics Co., Ltd., Gyeonggi-do 442-742 (KR)
(72) Inventor: Yi, Kwon Ju, 446-712, Gyeonggi-do (KR); Choi, Chang Kyu, 446-712, Gyeonggi-do (KR); Han, Jae Joon, 446-712, Gyeonggi-do (KR); Spark, Du-Sik, 446-712, Gyeonggi-do (KR)
(74) Representative: Grootscholten, Johannes A.M.

(57) **Abstract**

A multi-touch and proximate object sensing apparatus using a sensing array is provided. The multi-touch and proximate object sensing apparatus may sense a touch image or a target image by sensing an invisible light which is projected to a diffuser through the sensing array. Also, the multi-touch and proximate object sensing apparatus may display an image on a display panel by controlling a location of the sensing array and a visible light source, without a backlight unit.

## Description

The present invention relates to a multi-touch and proximate object sensing apparatus using sensing array.

### BACKGROUND

### 1. Field

Example embodiments of the present disclosure relate to a multi-touch sensing apparatus that may sense a touch image or a target image using a sensing array.

### 2. Description of the Related Art

Along with the development of display technologies, interest in a technology for identifying a location of an object that touches the display has increased. In a touch-based or sketch-based display, when a touch sensor is combined with a conventional Liquid Crystal Display (LCD) attached to a backlight unit that provides a planar white light, planar light may not be uniform.

In the conventional art, a structure where a diffuser is omitted and an Infrared Ray (IR) sensor is included to sense an object that is located on or above an LCD display has been provided. In this structure, although a route of the IR light source may be secured, a quality of an image outputted from an LCD display may be degraded, and a touch sensor, located below the LCD display, may be exposed.

Accordingly, a multi-touch and proximate object sensing apparatus that may change a location of a light source to sense a touch of an object, and change a shape of the object without degrading an image quality is desired. Also, since a touch panel display is often used in a portable device, a structure that may reduce a thickness of the touch sensing apparatus is desired.

### SUMMARY

The foregoing and/or other aspects of the present invention may be achieved by providing a sensing apparatus, including: a diffuser where an invisible light is projected; a visible light source, arranged below the diffuser, to emit a visible light to the diffuser; and a sensing array, arranged below the diffuser, to sense the invisible light which is projected to the diffuser.

The sensing apparatus may further include an invisible light source, arranged above the diffuser, to emit the invisible light to sense a touch image or a target image, the touch image or the target image being generated by an object.

The sensing apparatus may further include a light guide, arranged above the diffuser, to totally and internally reflect the invisible light emitted from the invisible light source. The invisible light source may emit the invisible light to an inside of the light guide or to the object. The object may be arranged above the light guide or may be spaced apart from an upper side of the light guide by a predetermined distance, and the sensing array may sense the invisible light reflected by the object.

When the invisible light emitted from the invisible light source is totally and internally reflected in the light guide, the sensing array may sense a location where the total internal reflection is prevented by the object.

The invisible light source may be spaced apart from the diffuser by a predetermined distance and emit the invisible light to sense the touch image to the diffuser. In this instance, the invisible light source may emit the invisible light vertical to the diffuser or by a predetermined angle to the diffuser.

The visible light source may be arranged below and vertical to the diffuser, and emit the visible light directly to the diffuser.

Also, the visible light source may be arranged below an edge of the diffuser, and emit the visible light to the diffuser by reflecting the visible light through a waveguide.

The foregoing and/or other aspects of the present invention may be achieved by providing a sensing apparatus, including: a diffuser where an invisible light is projected; and a sensing array, arranged below the diffuser, to sense the invisible light which is projected to the diffuser.

The sensing apparatus may further include: an invisible light source, arranged above the diffuser, to emit the invisible light to sense a touch image or a target image, the touch image or the target image being generated by an object.

The invisible light source may emit the invisible light vertically to the diffuser or may emit the invisible light by a predetermined angle with the diffuser.

The foregoing and/or other aspects of the present invention may be achieved by providing a sensing apparatus, including: an Organic Light Emitting Diode (OLED) to emit a visible light, an OLED panel where the OLED is arranged, an invisible light source, arranged above the OLED panel, to project invisible light towards the OLED panel, and a sensing array, arranged below the OLED panel, to sense the invisible light that is projected towards the OLED panel.

The foregoing and/or other aspects of the present invention may be achieved by providing a sensing apparatus with a touchable surface. The sensing apparatus includes a diffuser, arranged below the touchable surface, an invisible light source, arranged above the diffuser, to emit an invisible light towards the diffuser, a visible light source, arranged below the diffuser, to emit a visible light towards the diffuser, a sensing array, arranged below the diffuser, to sense the invisible light, and a controller to selectively control a quantity of the visible light projected towards the diffuser.

The sensing array may be arranged as a two-dimensional matrix of sensors to measure an invisible light intensity across one or more two dimensional coordinates of the touchable surface.

The sensing apparatus may further include a display configured to display an image that is viewable on the touchable surface.

When an object is sensed by the sensing array as being placed in contact with or above a portion of the touchable surface, an appearance of the displayed image is changed.

When an object is sensed by the sensing array as being placed above a portion of the touchable surface, an appearance is changed of a portion of the displayed image corresponding to the portion of the touchable surface approached by the object.

The change in appearance of the portion of the displayed image may include a change in brightness of the portion of the displayed image, which brightness is changed by changing a quantity of the visible light projected towards the diffuser.

The controller may control the quantity of the visible light corresponding to an area of the touch depending on an intensity of the touch.

### BRIEF DESCRIPTION OF THE DRAWINGS

These and/or other aspects will become apparent and more readily appreciated from the following description of the example embodiments, taken in conjunction with the accompanying drawings of which:
FIG. 1 illustrates a multi-touch and proximate object sensing apparatus where an invisible light source is arranged at an edge of the multi-touch and proximate object sensing apparatus;
FIGS. 2 and 3 illustrate configurations of a multi-touch sensing apparatus where an invisible light source is spaced apart from the multi-touch sensing apparatus;
FIG. 4 illustrates a multi-touch and proximate object sensing apparatus using a waveguide;
FIGS. 5 and 6 illustrate configurations of a multi-touch sensing apparatus using a waveguide;
FIGS. 7 and 8 illustrate configurations of a multi-touch and proximate object sensing apparatus using a plurality of invisible light sources;
FIG. 9 illustrates a configuration of a multi-touch sensing apparatus using an invisible light around an object;
FIG. 10 illustrates a multi-touch and proximate object sensing apparatus where a visible light source is controlled by a controller to vary with a user's touch; and
FIG. 11 illustrates a configuration of a multi-touch sensing apparatus using an Organic Light Emitting Diode (OLED) panel as the display panel.

### DETAILED DESCRIPTION

Reference will now be made in detail to example embodiments, examples of which are illustrated in the accompanying drawings, wherein like reference numerals refer to the like elements throughout. Example embodiments are described below to explain the present disclosure by referring to the figures.

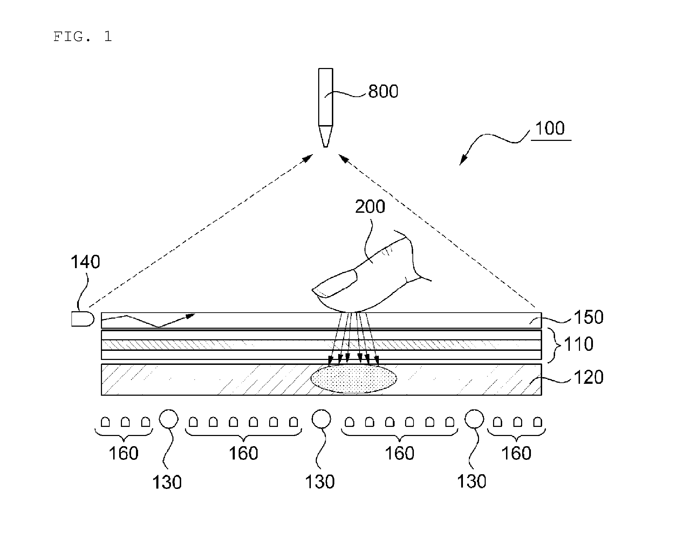

FIG. 1 illustrates a multi-touch and proximate object sensing apparatus 100 where an invisible light source is arranged at an edge of the multi-touch and proximate object sensing apparatus.

Referring to FIG. 1, the multi-touch and proximate object sensing apparatus, hereinafter, referred to as a sensing apparatus 100, may include, for example, a display panel 110, a diffuser 120, a visible light source 130, an invisible light source 140, a light guide 150, and a sensing array 160.

The display panel 110 may be arranged in an upper portion, e.g., in an upper layer of the sensing apparatus 100. In this instance, the display panel 110 may be a Liquid Crystal Display (LCD) panel. The display panel 110 may have a touchable surface, while also being able to display a graphic image viewable via the touchable surface.

The diffuser 120 may be arranged below the display panel 110. Also, the diffuser 120 may emit visible light in a planar form by diffusing, spreading out, or scattering the visible light incident from the visible light source 130. Here, the visible light, emitted from the visible light source 130, or an invisible light, emitted from the invisible light source 140, may be incident on the diffuser 120.

Also, the diffuser 120 may emit the planar visible light incident from the visible light source 130. In this instance, a pattern may be formed to remove a hot spot with remaining uniformity of the incident light. Here, the hot spot may be generated due to visible light from the visible light source 130 being focused on a predetermined portion of the diffuser 120. The visible light source 130 may be comprised of different types of sources such as a Cold Cathode Fluorescent Lamp (CCFL) or a Light Emitting Diode (LED) .

The visible light source 130 emits visible light and may be arranged below and vertical to the diffuser 120. That is, the visible light source 130 may be arranged as a direct type with respect to the diffuser 120. In this instance, the visible light source 130 may directly emit the visible light, used to display an image on the display panel 110, to the diffuser 120. A structure where a backlight unit is removed from the display panel 110 is illustrated in FIG. 1. The diffuser 120 and the visible light source 130 may function as the backlight unit. Since the backlight unit may be removed, a thickness of the sensing apparatus 100 may be reduced in comparison to a similar panel that includes a backlight.

For example, the visible light source 130 may be comprised of one or more of the CCFL or the LED. The visible light, emitted from the visible light source 130, may be changed to a planar light by way of the diffuser 120.

The invisible light source 140 may be arranged above the diffuser 120. For example, the invisible light source 140 may be arranged on a surface of the diffuser 120 that is opposite the surface of the diffuser 120 on which the visible light source 130 is arranged. Also, the invisible light source 140 may emit an invisible light to sense a touch image or a target image. The touch image or the target image may be generated by an object, and the object may be arranged above the light guide 150 or may be spaced apart from an upper side of the light guide 150 by a predetermined distance.

For example, as illustrated in FIG. 1, the invisible light source 140 may emit the invisible light towards an object 800 closely located above the light guide 150. Further, the invisible light may include an Infrared Ray (IR) or an UltraViolet (UV).

Specifically, when an object 200 is located on the upper side of the light guide 150, the invisible light source 140 may emit invisible light to sense a touch image or a target image reflected on a surface of the display panel 110 by the object 200, which is located above or on the display panel 110. Here, the target image may be an image corresponding to a location of a reflection light, reflected by the object 200 located close to the upper side of the light guide 150, from among images displayed in the display panel 110. The reflection light may have a shape that is similar to the shape of the object 200.

In this instance, the invisible light source 140 may be arranged to emit the invisible light to an inside of the light guide 150, located above the display panel 110, or to the object 800 which is spaced apart from the upper side of the light guide 150 by a predetermined distance. For example, the invisible light source 140 may be arranged at an edge of an upper portion of the display panel 110.

The light guide 150 may totally and internally reflect the invisible light emitted from the invisible light source 140. For example, the light guide 150 may be made of a transparent material such as an acryl, polycarbonate plate, and the like. When an object such as a digit, e.g., a finger, of a user or a stick, e.g., a stylus, is located on or above the display panel 110, total internal reflection occurring inside the light guide 150 due to the object may be prevented.

The sensing array 160 may be arranged below the diffuser 120 to sense the invisible light projected from the invisible light source 140 towards the diffuser 120 or to sense invisible light reflected by an object such as object 200.

For example, when the object 200 is located on the light guide 150, the sensing array 160 may identify a location of the invisible light that is reflected by the object 200 and projected to the diffuser 120, and may sense the touch image corresponding to the identified location.

Also, when the object 800 is spaced apart from the light guide 150 by the predetermined distance, the sensing array 160 may identify a location of the invisible light that is reflected by the object 800 and directly projected or transmitted to the diffuser 120, and may sense the target image corresponding to the identified location.

For example, the target image may be a reflection light image projected or transmitted to the diffuser 120. The reflection light image may have a shape similar to that of the object. In this instance, the object may be located close to the light guide 150 to enable the invisible light source 140 to emit the invisible light to the object.

Also, the sensing array 160 may identify a location where the total internal reflection is prevented in the light guide 150, and sense the touch image corresponding to the identified location. Here, the sensing array 160 may include at least one invisible light sensor to sense the invisible light.

In this instance, the invisible light sensor may be a photo diode or a photo transistor. The invisible light sensor may be arranged in matrix form in the sensor array 160, and extract a voltage or a current that varies depending on a quantity of invisible light emitted from the invisible light source 140. Also, the invisible light sensor may provide an invisible light intensity of the touch image depending on two-dimensional (2D) coordinates of the touchable surface, based on the extracted voltage or current.

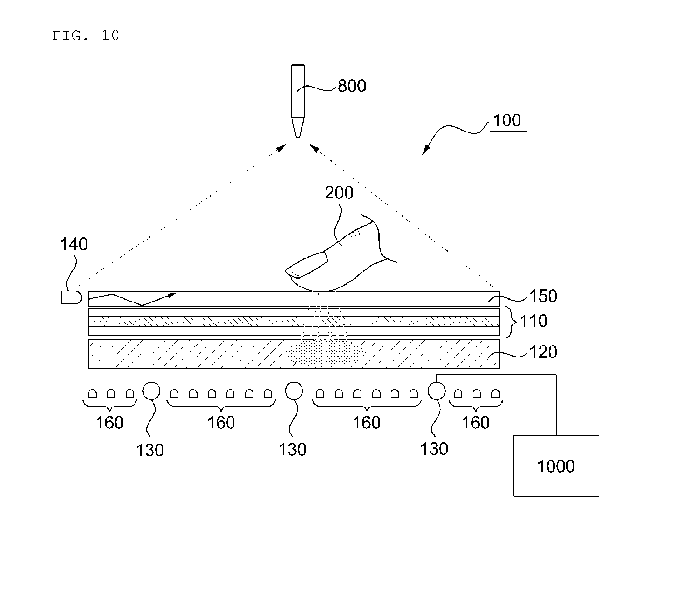

For example, as illustrated in FIG. 10, the visible light source 130 may be controlled e.g., by a controller 1000 using control information, and thereby may be selectively turned on or off. Alternatively, the quantity of the visible light may be selectively controlled by controller 1000. As a further example, the quantity of the visible light may be varied at particular LED locations of the visible light source 130 corresponding to particular 2D coordinates of the touchable surface. Here, the control information may be previously defined based on image data, obtained by the sensing array 160, and include information about a touch to the light guide 150, a shadow of the invisible light projected to the diffuser 120, and a movement of the invisible light source 140.

Specifically, when the user touches the touchable surface of the light guide 150, or when the user touches the touchable surface of the light guide 150 using an object, the controller 1000 may control a quantity of the emitted visible light corresponding to an area of the touch depending on an intensity of the touch, thereby enhancing communication of the apparatus with the user. Also, the controller 1000 may selectively turn visible light source 130 on or off based on a movement of the touch.

Here, controller 1000 may control the quantity of the visible light emitted by the visible light source 130 using the movement of the invisible light source 140, which is spaced apart from the diffuser 120 by the predetermined distance, or the shadow of the invisible light projected on the diffuser 120.

For example, when an object such as a digit of the user or a stylus held by the user moves with respect to the diffuser 120 in a vertical, horizontal, or diagonal direction, the quantity of the visible light may be controlled, e.g., by controller 1000. That is, a brightness of an image displayed on the display panel 110 may be controlled depending on the movement of the object.

Through this, information about a pointing location and movement of the object may be transmitted to a controller, e.g., an apparatus of controlling information about the LCD, and thus a user input device may be operated. Here, the apparatus of controlling the information about the LCD may be a Personal Computer (PC), and the user input device may be a mouse or a keyboard.

In this instance, the image data may be obtained when the sensing array 160 senses the invisible light reflected by the object, a shadow of the object, or the invisible light directly emitted to the diffuser 120.

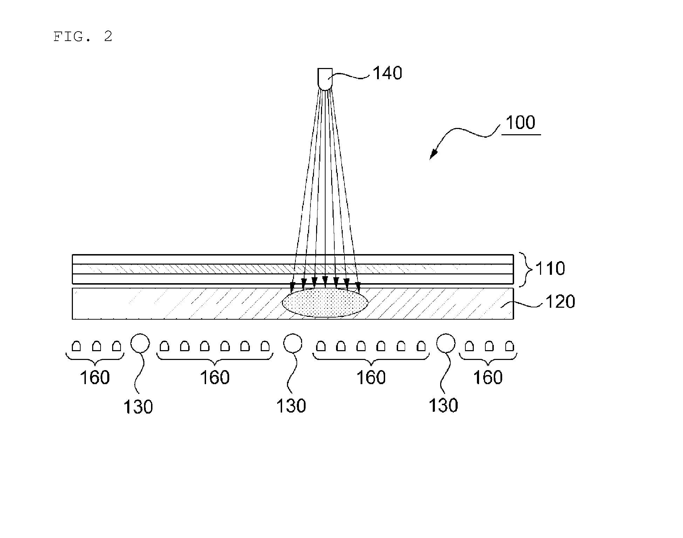

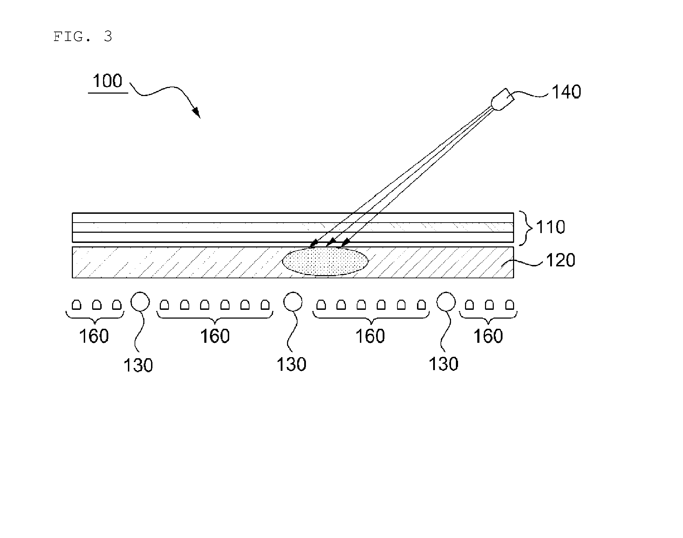

FIGS. 2 and 3 illustrate a configuration of a sensing apparatus 100 where an invisible light source is spaced apart from the multi-touch sensing apparatus, e.g., elevated above the touch surface of the display panel.

Referring to FIG. 2, the sensing apparatus 100 may include, for example, the display panel 110, the diffuser 120, the visible light source 130, the invisible light source 140, and the sensing array 160.

The display panel 110 may be arranged in an upper portion, e.g., in an upper layer of the sensing apparatus 100, and displays an image.

The diffuser 120 may be arranged below the display panel 110, and diffuses a visible light, emitted from the visible light source 130, in a planar form.

The visible light source 130 may be arranged below and vertical to the diffuser 120, and emits visible light. That is, the visible light source 130 may be arranged as a direct type with respect to the diffuser 120. Here, the visible light source 130 may directly emit the visible light, used to display an image on the display panel 110, to the diffuser 120.

The invisible light source 140 may be spaced apart from the diffuser 120 by a predetermined distance. Also, the invisible light source 140 may emit an invisible light towards the diffuser 120 to sense a touch image or a target image. As illustrated in FIG. 2, the invisible light source 140 may emit the invisible light orthogonally to an upper side of the diffuser 120, or may emit the invisible light at a predetermined angle to the upper side of the diffuser 120, e.g., at an angle offset from the orthogonal. For example, the invisible light source 140 may be a lamp or a laser pointer.

The sensing array 160 may be arranged below the diffuser 120, and may sense the invisible light projected from the invisible light source 140 to the diffuser 120.

For example, the sensing array 160 may identify a location of the invisible light that is reflected by the object 200 and projected to the diffuser 120, and may sense the touch image corresponding to the identified location. Here, since the sensing array 160 of FIG. 2 is identical to the sensing array 160 of FIG. 1, further descriptions will be omitted.

Also, the sensing array 160 may sense the invisible light, projected towards the diffuser 120, and may obtain coordinates of the invisible light source 140.

When the laser pointer is used as the invisible light source 140, the sensing array 160 may sense the invisible light, projected to the diffuser 120 by the predetermined angle, and obtain the coordinates pointed to by the laser pointer.

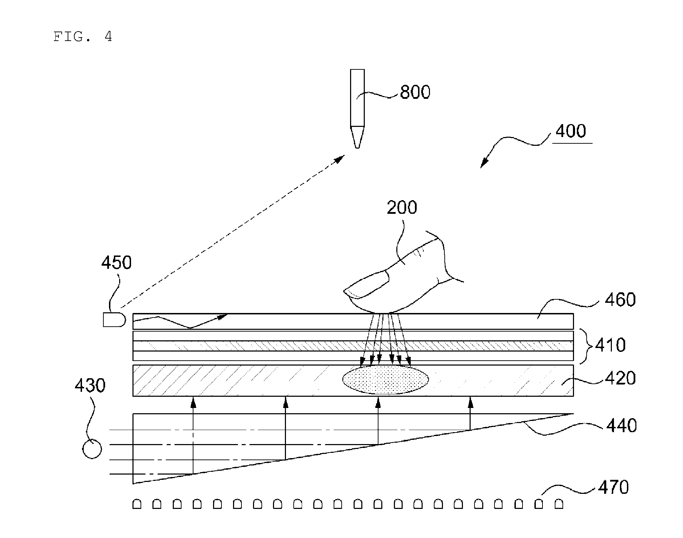

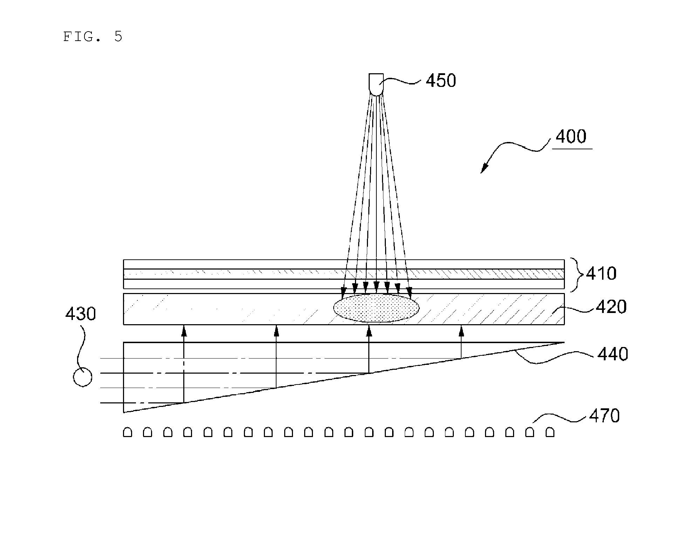

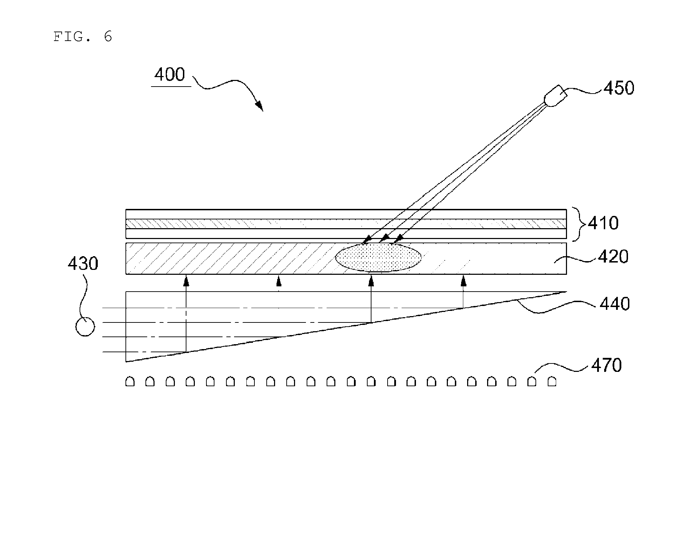

FIG. 4 illustrates a sensing apparatus 400 using a waveguide. FIGS. 5 and 6 illustrate a configuration of the sensing apparatus 400 using a waveguide. That is, FIGS. 4 through 6 illustrate the sensing apparatus 400 where the waveguide is added to the sensing apparatus 100 of FIGS. 1 through 3. Components already described above with reference to FIGS. 1 through 3 will not be further described below.

Referring to FIG. 4, the sensing apparatus 400 may include, for example, a display panel 410, a diffuser 420, a visible light source 430, a waveguide 440, an invisible light source 450, a light guide 460, and a sensing array 470.

The display panel 410 may be arranged in an upper portion, e.g., an upper layer, of the sensing apparatus 400, and displays an image.

The diffuser 420 may be arranged below the display panel 410, and emits a planar visible light emitted from the visible light source 430.

The visible light source 430 may be arranged below an edge of the diffuser 420, and emits the visible light. For example, the visible light source 430 may emit the visible light, used to display an image on the display panel 410, to the diffuser 420 through the waveguide 440. In this instance, the visible light source 430 may be arranged in an edge type with respect to the diffuser 420.

The waveguide 440 may be arranged below the diffuser 420, and reflect the visible light, emitted from the visible light source 430, to the diffuser 420. For example, the waveguide 440 may be a wedge type having different thicknesses of edges. Also, a plate type having an even thickness may be used as the waveguide 440. Through this, an efficiency in emitting a visible light to the diffuser 420 may be improved, and a reflection pattern may be adjusted based on a distance between the waveguide 440 and a light source located at an edge, for uniform planar light.

The invisible light source 450 may be arranged above the diffuser 420, and emits an invisible light to sense a touch image or a target image. The touch image or the target image may be generated by an object.

The light guide 460 may totally and internally reflect the invisible light emitted from the invisible light source 450.

The sensing array 470 may be arranged below the waveguide 440, and may sense the invisible light projected from the invisible light source 450 to the diffuser 420.

That is, when the object 800 is located on or above the light guide 460, the sensing array 470 may identify a location of the invisible light that is reflected by the object 200 and projected to the diffuser 420, and may sense the touch image corresponding to the identified location. In this instance, the sensing array 470 may identify a location where the total internal reflection is prevented in the light guide 460, and sense a touch image corresponding to the identified location.

Also, when the object 800 is spaced apart from the light guide 460 by the predetermined distance, the sensing array 470 may identify a location of the invisible light, which is reflected by the object 800 and directly projected or transmitted to the diffuser 420, and may sense a target image corresponding to the identified location.

Referring to FIGS. 5 and 6, the sensing apparatus 400 may include, for example, the display panel 410, the diffuser 420, the visible light source 430, the waveguide 440, the invisible light source 450, and the sensing array 470.

The display panel 410 may be arranged in an upper portion, e.g., an upper layer, of the sensing apparatus 400, and displays an image.

The diffuser 420 may be arranged below the display panel 410, and emits a planar visible light by diffusing, spreading out, and scattering a visible light emitted from the visible light source 430.

The visible light source 430 may be arranged below an edge of the diffuser 420, and emits visible light. In this instance, the visible light source 430 may emit the visible light to the diffuser 420 through the waveguide 440.

The waveguide 440 may be arranged below the diffuser 420, and reflect the visible light, emitted from the visible light source 430, to the diffuser 420. Since the visible light, emitted from the visible light source 430, may be reflected through the waveguide 440, the visible light may be vertically, e.g., orthogonally, incident on the diffuser 420. That is, the visible light source 430 may be arranged in an edge type with respect to the diffuser 420.

The invisible light source 450 may be spaced apart from the diffuser 420 by a predetermined distance, and emits an invisible light to sense a touch image or a target image to the diffuser 120. As illustrated in FIG. 5, the invisible light source 450 may emit the invisible light to be orthogonal to an upper side of the diffuser 420. Also, as illustrated in FIG. 6, the invisible light source 450 may emit the invisible light at a predetermined angle to the upper side of the diffuser 420, e.g. e.g., at an angle offset from the orthogonal.

The sensing array 470 may be arranged below the diffuser 420, and may sense the invisible light projected from the invisible light source 450 to the diffuser 420.

As one example, when a laser point is used as the invisible light source 450, the sensing array 470 may sense the invisible light, projected to the diffuser 420 at the predetermined angle, and may obtain coordinates pointed to by the laser pointer.

As another example, when an LED pointer is used as the invisible light source 450, the sensing array 470 may sense the invisible light, vertically and downwardly emitted from the LED pointer and thereby projected to the diffuser 420, and may obtain coordinates pointed to by the LED pointer.

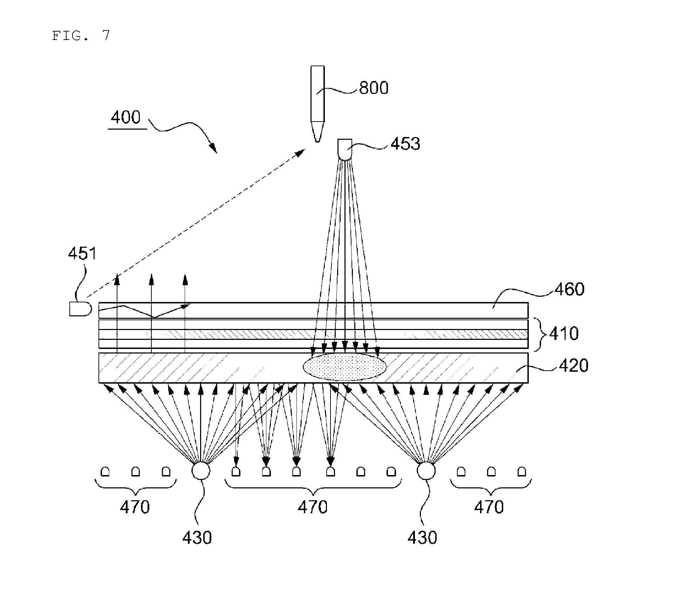

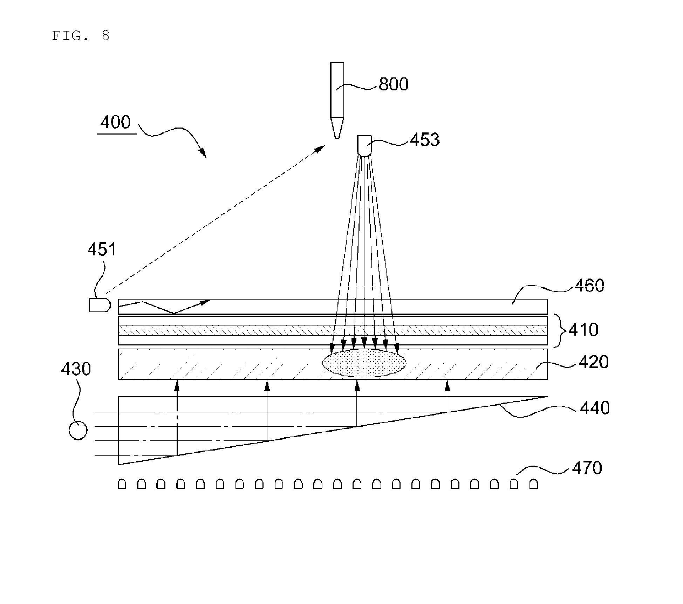

Although it has been described that a single invisible light source exists, the sensing array 470 may sense the touch image, the target image, or the invisible light, projected to the diffuser 420, using a plurality of invisible light sources 451 and 453 as illustrated in FIGS. 7 and 8. That is, the sensing array 470 may sense the touch image or the target image using a reflection light reflected by an object. Here, the object may be located on an upper side of the light guide 150, or close to the upper side of the light guide 150. When the laser pointer corresponds to the invisible light source 450, the sensing array 470 may obtain the pointed to coordinates.

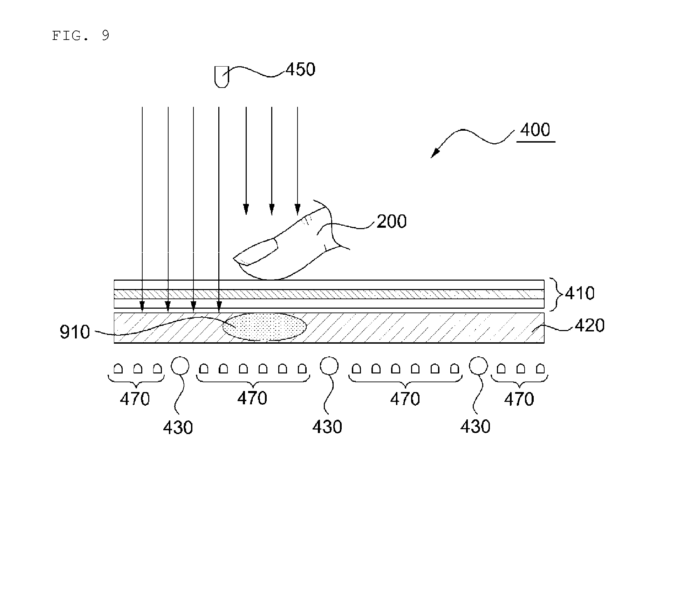

Also, the sensing array 470 may sense the touch image using a shadow, occurring when the invisible light is blocked by the object 200, as well as the invisible light reflected by the object 200. That is, as illustrated in FIG. 9, the sensing array 470 may sense a shadow 910, occurring when the invisible light is blocked by the object 200 in the diffuser 420, and thereby may sense the touch image. The invisible light 450 may include a lamp or sunlight or both.

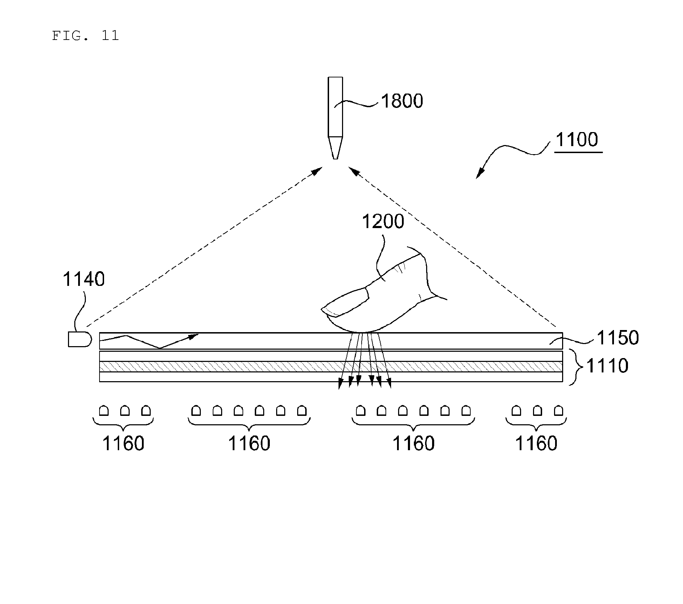

Embodiments have been described in which a sensing apparatus senses a touch image or a target image projected to a diffuser. However, as illustrated at FIG. 11, in an embodiment, when an LCD panel is used as a display panel, an Organic Light Emitting Diode (OLED) display panel 1110 may be used. Here, an OLED may be used as a visible light source.

Referring to FIG. 11, the sensing apparatus 1100 may include, for example, the OLED panel 1110, the invisible light source 1140, light guide 1150, and the sensing array 1160. For example, when the OLED is used as the visible light source, the diffuser may be removed from the sensing apparatus 1100. In this instance, the sensing array 1160 may be located below the OLED panel 1110 to sense an invisible light projected by the invisible light source 1140 to the OLED panel 1110 or reflected by an object such as objects 1200 or 1800.

Accordingly, a visible light source and a sensing array may be arranged below a diffuser to display an image and sense a touch image, and thus a total thickness of a sensing apparatus may be reduced.

Also, the sensing array may be arranged below the diffuser, and thus a visible light source may not be affected by the sensing array, and image quality may be improved.

Also, the touch image may be sensed using a predetermined number of sensing arrays, arranged below the diffuser, and thus a price of the sensing apparatus may be reduced.

Although a few embodiments have been shown and described, it would be appreciated by those skilled in the art that changes may be made in these embodiments without departing from the principles of the invention, the scope of which is defined in the appended claims, in particular the appended independent claim, and/or dependent claims and/or embodiments comprising equivalent features relative to the independent and/or dependent claims.

## Claims

1. A sensing apparatus, comprising:
- a diffuser to which an invisible light is projected;
- a visible light source, arranged below the diffuser, to emit a visible light to the diffuser; and
- a sensing array, arranged below the diffuser, to sense the invisible light which is projected to the diffuser.

2. The sensing apparatus of claim 1, further comprising: an invisible light source, arranged above the diffuser, to emit the invisible light, wherein the invisible light is used to sense a touch image or a target image generated by an object.

3. The sensing apparatus of claim 1 or 2, further comprising: a light guide, arranged above the diffuser, to totally and internally reflect the invisible light, wherein the invisible light is projected to an inside of the light guide or to the object.

4. The sensing apparatus of claim 1, 2 or 3, wherein the sensing array senses the invisible light reflected by the object when the object is arranged above the diffuser or is spaced apart from an upper side of the diffuser by a predetermined distance.

5. The sensing apparatus of any of the preceding claims 3, wherein, when the invisible light emitted is totally and internally reflected in the light guide, the sensing array senses a location where the total internal reflection is obscured by the object.

6. The sensing apparatus of at least claim 2, wherein the invisible light source is spaced apart from the diffuser by a predetermined distance and emits the invisible light to the diffuser to sense the touch image.

7. The sensing apparatus of claim 6, wherein the invisible light source emits the invisible light orthogonally to the diffuser or at a predetermined angle to the diffuser.

8. The sensing apparatus of any of the preceding claims, wherein the visible light source is arranged below and orthogonally to the diffuser, and emits the visible light directly to the diffuser.

9. The sensing apparatus of any of the preceding claims, wherein the visible light source is arranged below an edge of the diffuser, and emits the visible light to the diffuser by reflecting the visible light through a waveguide.

10. The sensing apparatus of at least claim 2, wherein the sensing array detects coordinates of the invisible light source, the coordinates of the invisible light source being indicated by sensing the invisible light projected to the diffuser.

11. The sensing apparatus of any of the preceduing claims, wherein the sensing array detects a location of a shadow occurring inside the diffuser, the shadow occurring when the invisible light is blocked by the object.

12. The sensing apparatus of anty of the preceding claims, wherein the visible light source is selectively turned on or off based on image data, sensed through the sensing array, or controls a light quantity based on the image data.

13. The sensing apparatus of any of the preceding claims, wherein the visible light source emits a planar visible light through the diffuser.

14. A sensing apparatus, comprising:
- an Organic Light Emitting Diode (OLED) to emit a visible light;
- an OLED panel where the OLED is arranged;
- an invisible light source, arranged above the OLED panel, to project invisible light towards the OLED panel; and
- a sensing array, arranged below the OLED panel, to sense the invisible light that is projected towards the OLED panel.

15. The sensing apparatus of claim 14, further comprising a second invisible light source arranged above the OLED panel and positioned near an edge of the OLED panel,
wherein the invisible light is used to sense a touch image or a target image generated by an object.
